Europäisches Patentamt

European Patent Office

Office européen des brevets

(11) Publication number: **0 333 515**
**A2**

# (12) EUROPEAN PATENT APPLICATION

(21) Application number: 89302695.5

(22) Date of filing: 17.03.89

(51) Int. Cl.⁴: **D 06 M 15/507**
**D 04 H 1/42, D 04 H 1/54**

(30) Priority: 18.03.88 GB 8806419

(43) Date of publication of application:
20.09.89 Bulletin 89/38

(84) Designated Contracting States:
CH DE ES FR GB IT LI NL

(71) Applicant: E.I. DU PONT DE NEMOURS AND COMPANY
1007 Market Street
Wilmington Delaware 19898 (US)

(72) Inventor: Marcus, Ilan
56, Montfleury
CH-1290 Versoix (CH)

Halling, Robert Allen
2713 Keswick Court
Wilmington Delaware 19808 (US)

van Issum, Bernhard Ernest
44A Vieux Chemin D'Onex
CH-1213 Onex (CH)

(74) Representative: Jones, Alan John et al
CARPMAELS & RANSFORD 43 Bloomsbury Square
London, WC1A 2RA (GB)

(54) Improvements in polyester fibers.

(57) The dispersibility in water of synthetic fiber, especially polyester fiber, is improved by coating with an improved copolyester coating, the improvements being that the copolyester is modified so as to contain polar groups that provide sites that are susceptible to a cross-linking-type reaction, and that the resulting materials are then subjected to such cross-linking-type reaction, whereby the durability of the coating on the fiber is improved, and wherein advantages are obtained in the products obtained from such fibers.

EP 0 333 515 A2

**Description**

**IMPROVEMENTS IN POLYESTER FIBERS**

TECHNICAL FIELD

This invention concerns improvements in and relating to synthetic fibers and especially to polyester fibers that are not used in the traditional textile sense, i.e. that are not used as yarns for making traditional textiles by weaving or knitting, but as water-dispersible fibers for making wet-laid materials, including nonwoven fabrics, and board and paper-making, and sometimes referred to therefore as papermaker staple, or in pulps for other purposes, such as often referred to as fluff pulp for use, e.g. in incontinence products and for other absorbent purposes, and for other non-traditional textile uses.

BACKGROUND OF THE INVENTION

Synthetic fibers, such as polyester fibers, and textile yarns thereof have been known and used commercially for several decades, having been first suggested by W. H. Carothers, U.S. Patent No. 2,071,251 and then by Whinfield and Dickson, U.S. Patent No. 2,465,319. The synthetic polyester polymer that has been used most for fibers for commercial purposes is poly(ethylene terephthalate), made from ethylene glycol and dimethyl terephthalate or terephthalic acid, and its fibers have been used for apparel and other purposes.

In recent years, much has been written about synthetic fibers, and many billions of pounds have been manufactured and used, especially of polyester fiber, because it has been especially desirable for economic reasons and because of its properties, and so the description herein will, mostly, specifically discuss polyester fiber, since it is preferred. Over the years, especially initially, much of the production of synthetic fiber has been directed into textile yarns for knitting and weaving, as had been traditional with natural fibers. This invention is not concerned with such traditional knitted or woven textile fabrics, nor with preparing fibers that are specifically designed for use in such fabrics, nor in yarns for such traditional textile processes as knitting and weaving.

There has been increased interest in recent years in water-dispersible synthetic fiber, and especially polyester fiber. Such water-dispersible fiber is used in various non-woven applications, including paper-making, including board-making, and wet-laid non-woven fabrics, sometimes as part of a blend, often with large amounts of wood pulp, e.g. for paper-making, and/or with other synthetic fibers, but also in applications requiring only polyester fiber, i.e. unblended with other fiber. For convenience herein, reference will frequently be made to paper or to wet-laid products, as the problems of introducing synthetic fibers such as polyester fibers are generally similar for such wet deposition processes. This use (and so the requirements therefor) is entirely different from previous more conventional staple fiber for conversion into textile yarns for eventual use in woven or knitted fabrics, because of the need to disperse this fiber in water instead of to convert the conventional textile fiber into textile yarns, e.g. by processes such as carding and spinning, e.g. using the cotton system. It is this requirement for water-dispersibility that distinguishes the field of the invention from previous more conventional polyester-staple-fiber. Increasing amounts of, e.g., polyester fibers are being manufactured specifically for this end-use, with special configurations, e.g. L/D ratio and cross-sectional shape, coatings and other features to improve water-dispersibility and the desired properties downstream. Reference may be made in this regard to U.S. Patents Nos. 4,707,407 (Clark and Shiffler) and 4,713,289 (Shiffler) and EP A1 0198400, 0198401 and 0261820, and Yoshida et al U.S. Patent No. 4,529,481, and the paper by Shiffler, entitled "Characterizing the Dispersion Kinetics of Synthetic Fibers in Water" at the 1984 Nonwovens Symposium, April 1984, reported and available from TAPPI, and the reference therein. The term "fiber" is used broadly herein, so as to include, in particular, such finely-divided water-dispersible filamentary materials as are sometimes referred to as fibrids or fibrils, e.g. in some of the above art, such as Yoshida. Continuous filaments are not themselves water-dispersible. However, as is well known, synthetic fibers are generally first formed from synthetic polymers by extrusion (melt-spinning in the case of polyesters) to form continuous filaments that may be comminuted when the actual water-dispersible fibers are required; so continuous filaments coated with the appropriate water-dispersing coating are generally precursors, i.e. intermediates between the polymer mass and the eventual cut fiber that is water-dispersible.

Most such water-dispersible polyester fiber is of poly(ethylene terephthalate), and the filaments are initially prepared in essentially the same general way as conventional polyester fiber for textile staple, except that, previously, most water-dispersible polyester fiber has not been crimped, whereas any polyester staple fiber for use in textile yarns is generally crimped, the crimping being performed on filaments, while in the form of tow, before conversion into staple fiber, because good crimp properties in the staple fiber provide the desired frictional properties desirable for downstream processing and in the resultant spun yarns. Thus, water-dispersible polyester fiber has generally been prepared by melt-spinning the polyester into filaments, combining the filaments to form a tow, drawing, applying a suitable water-dispersing coating to impart water-dispersible properties, generally in the same way as a finish is applied to a tow of conventional textile filaments, and then (generally without any crimping or with imparting only some mild wavy undulations in some cases so that the final sheet made therefrom has extra bulk and a three-dimensional matrix), the two has been cut to the desired cut length, i.e. to form the cut fibers that are water-dispersible. Such cut fiber has generally been sold in the form of bales of fiber compressed together.

Polyester (and other synthetic) fibers are naturally hydrophobic, significantly more so than cellulose wood pulps or cotton. This hydrophobic nature has posed a problem in regard to their suitability for wet-laying processes, as disclosed by Ring et al. in U.S. Patent No. 4,007,083, Hawkins in U.S. Patent Nos. 4,137,181, 4,179,543 and 4,294,883, and Viscose Suisse in British Patent No. 958,430. As disclosed therein, it has been difficult to find a way to overcome the inherent hydrophobic character of the polyester fiber without creating foam or causing the fibers to flocculate. Inclusion of hydrophobic synthetic fibers has also tended to cause significant tensile losses in the wet-laid products unless recourse has been made to chemical or thermal bonding operations. The defects of previous suggestions in this regard have, hitherto, discouraged wide-spread commercial use of synthetic fibers in wet deposition processes, and many theoretical proposals as to advantages that could and should have been expected from use of synthetic fibers to make sheet structures by such wet processes have not been realized in practice, at least on a commercial scale. An important advantage that had been expected, in theory, was an improvement in strength-type properties, because of the well-known superiority of many synthetics over common natural fibers, e.g. cellulose fibers, such as wood pulp, in this regard. But the general experience, in practice, on the part of commercial wet-laying manufacturers, has been that introduction of synthetics has generally significantly decreased these strength-type properties of the resulting sheets. Our investigations have led us to believe that these defects have often been caused by inferior water-dispersibility, that has led to lack of uniformity in the distribution of the synthetics, and so to weaknesses in the sheets produced. So, we believe it possible that an improvement in water-dispersibility could lead to new uses beyond those envisaged hitherto.

It is therefore an object of the invention to improve synthetic (especially polyester) fibers to make them more water-dispersible, and to achieve this objective economically. It is also our important objective to provide that the desirable characteristic of water-dispersibility is durable, i.e. is not easily lost, e.g. in an aqueous dispersion; we believe that some of the problems with prior suggestions has been the lack of durability of the water-dispersible characteristic, and that this may not have been generally recognized previously. For some of the desired applications, we also believe that it is desirable that the water-dispersible polyester fiber should show a low coefficient of friction, both towards other fibers, and towards metals, such as steel, i.e. it is desirable to improve water-dispersibility without undesirably affecting frictional properties (according to the desired end-use, and this is achievable hereby).

Recently, in relation to the field of slickened polyester fiberfill (an entirely separate technical field), some of us (in Du Pont) have improved polyester fiberfill so that it is slickened with a coating of a new copolyester having polyether segments as well polyester linkages, and wherein such copolyester contains residues of a chemical compound containing polar groups such as hydroxy groups (OH) and quaternary ammonium groups and amine groups (referred to generically as NH) and are filing thereon a copending application simultaneously herewith (DP-4349-A), the contents of which are hereby incorporated by reference. Preferred polyesters, among such new copolyesters, are the subject of copending PCT/US 89/00829, filed March 6, 1989, entitled "Modified Hydrophilic Polyesters", the contents of which are hereby incorporated by reference.

## DESCRIPTION OF INVENTION

We have now found, according to the present invention, that these same new copolyesters provide important advantages, when applied as coatings to synthetic fibers, in solving the problems referred to above in the field of water-dispersible synthetic fibers, especially polyester fibers because of the naturally hydrophobic characteristics of polyester fibers.

Thus, according to the present invention, there are provided improved water-dispersible synthetic polymer fibers, especially polyester fibers, that are coated with a coating of a copolyester having polyether segments as well as polyester linkages, and wherein the improvement is characterized in that the copolyester contains residues of a chemical compound containing polar groups such as hydroxyl groups (OH) and quaternary ammonium and amine groups (referred to generically as NH). Preferred such chemical compounds are polyhydroxy compounds containing at least 3 carbon atoms with hydroxyl functional groups. Sorbitol is an example of a polyhydroxy compound that has given very good results, and is available at a reasonable cost. An important advantage of the new fibers coated with these new modified copolyesters is that they are conveniently modified further by cross-linking with a suitable cross-linking agent and that, by such like means, further bonding of the coating in situ is achieved to improve the durability of the coating on the original fiber substrate. This improved durability is believed very important, in practice, for several reasons, e.g. to prevent leaching during wet deposition if effective water-dispersibility is to be achieved using the equipment and processes currently available for commercial manufacture, and, especially for incontinence and other absorbent purposes in fluff pulp, improved liquid transport along the coated fibers is believed very helpful and important. However, as will be understood, the fibers may enter into commerce before the cross-linking is effected, and such fibers are themselves new, per se. Suitable cross-linking action may be by direct esterification, with agents that include polycarboxylic acids, such as citric acid, transesterification, with esters, e.g., of citric acid with lower alcohols, for instance containing up to 6 carbon atoms, or by other cross-linking-type reactions, as described in the copending applications.

The new types of fiber, coated with the new (modified) copolyesters, have shown significant comparative advantages in various respects downstream. It is believed that the possibility of using such fibers in wet processing will lead to further opportunities and advantages in the future.

There is also provided, according to the present invention, an improved process for preparing water-dispersible synthetic polymer fiber, especially polyester fiber, in the form of cut fibers, and their precursor continuous filaments, comprising the steps of extruding the polymer (e.g. melt-spinning polyester) into filaments, processing a bundle of filaments in the form of a tow, if desired by drawing and possibly annealing to increase orientation and crystallinity, if desired crimping to produce crimped filaments, and relaxing the crimped filaments, and converting the filaments into staple fibers, wherein the fibers in the form of filaments or staple fibers are coated with a water-dispersing coating, and wherein such coating is a copolyester having polyether segments as well as polyester linkages, characterized in that the fibers are coated with a copolyester containing residues of a chemical compound containing polar groups as aforesaid, such as hydroxyl groups (OH) and (NH) groups (quaternary ammonium and amine groups).

A wide variety of copolyesters may prove appropriate for commercial applications, as indicated in copending DP-4349-A and PCT/US 89/00829, referred to hereinabove, with preferred base copolyesters (i.e., before modification according to the invention) having approximately equimolar amounts of poly(oxyethylene) terephthalate and ethylene terephthalate moieties, although the amounts and specific materials may be varied to suit the desired objective. For instance, normally, in paper end-uses, tensile improvements as well as tear improvements are necessary, however by correct selection of the reagents it is possible to deliberately reduce both tensile and tear, in a fluff pulp so that energy in defibrisation can occur, or that, by providing a less strong structure, fiber damage also to the fluff pulp is reduced in defibrisation. Previous work on debonders for use with fluff pulp to facilitate defibrisation in the hammermill has identified the need for small modification in debonder formulation to optimize the resultant performance in sulphate, sulphite and other "chemical" pulps versus those of mechanical origin, TMP, CTMP, etc. So, the polyether segment may vary upwards, e.g., up to about 85% by weight of such copolyester, such as in the range of (about) 50-85% by weight, and the ethylene terephthalate ester moieties may comprise much less, and as little as about 10% by weight, and in the range of (about) 10-35% by weight, constituting what may be regarded as a polyester linkage component, in contrast to the polyether chain component that provides hydrophilicity and other desired attributes to the coated fiber.

The multi-polar group modification and subsequent cross-linking of the copolyester according to the invention and the operative chemical compounds (and residues remaining in the improved copolyester) that are suitable are also indicated in more detail in copending application DP-4349-A and in PCT/US 89/00829, filed March 6. 1989, the contents of which have been herein incorporated by reference. This latter application gives a simple explanation of such copolyesters, and how they may be prepared, and how they differ from prior art suggestions, and how they may be cross-linked. However, with regard to water-dispersible fibers, according to the present invention, it is particularly important to recognize that, by modifications that may appear to vary only slightly from each other, it is possible to get entirely different products that are especially suited for completely separate end-uses, such as paper or board, and fluff pulp for incontinence purposes.

The amounts used will, likewise, depend on the objectives desired and the materials used, and may comprise, e.g., as much as about 20% by weight, e.g., of a (residue of a) polyhydroxy compound containing at least 3 carbon atoms with hydroxyl functional groups.

The amounts of the copolyester coating on the fiber will vary according to desired objectives, and are expected to be relatively small, conventionally being up to about 1% by weight of the fiber, as disclosed in the copending applications referred to.

Likewise, the cross-linking-type reactions and operative polyfunctional compounds to effect these are indicated in some more detail therein, and amounts will vary and depend on specific objectives (e.g., intended end-uses) and may be as much as about 10% or 12% by weight of the copolyester, e.g., in the range of about 0.5% to about 20% by weight.

It is believed that a particular advantage of preferred polar groups is when there are groups which are compatible with, and form chemical bonds with wood pulp. These bonds may be made permanent to avoid leaching as previously described by cross-linking with a variety of chemicals, themselves having sufficient free groups available to both bond the polyether segments around and onto the fiber substrate, and also to chemically bond or form looser hydrogen bonds with wood pulp in the eventual sheet structures. The looser bonds are usually preferred when it is desirable to permit recycling of paper products, depending on the objective.

The cross-linking agents may in themselves also have specific and possibly unusual benefits, e.g. some such sold as TYZOR, for example, can, depending on the type chosen, be activated in acid or alkaline papermaking systems to give improved opacity as well as strength improvements in that they can also bond to fillers (e.g. clay, calcium carbonate, talc, etc.) as mentioned in EP A1 0261820, referred to above.

Preferred polyester substrate fibers will normally be in the range from 0.5-20 den., however coarser deniers may be desirable for speciality paper end-uses. The fiber cross-section, can be round, or as described in references such as are mentioned above, and may be treated by Corona, UV, laser, stretch-breaking, shrinkage or other chemical, etc... treatments and/or modifications to affect the surface as desired.

The improvement is water-dispersibility enhances the bonding capability of the coated fibes, as indicated.

4

Other advantages are shown hereinafter, but include the ability to permit lower chemical bonding temperatures to be used, and thereby to obtain improved sheet softness, and better drape, particularly in wet-laid nonwoven structures. The ability to incorporate other groups, provides scope to impart a wide range of properties, such as bacteriostatic properties and control of odors, as mentioned in the copending applications.

The following Example further illustrates the invention: all parts being by weight, unless otherwise indicated.

## EXAMPLE

Table 1 compares measurements on sheets of open board structure, arranged to give 75-80 g/sq m (in fact being of 70-80 g/sq m, and with values normalized to compensate for small variations in weight between the various samples) prepared at 3m/min on a Bruderhaus laboratory inclined wire machine, using 550 g CTMP pulp added to 100 L water and pulped for 15 minutes, before adding any polyester fibers, then adding 16.5 g polyester fibers (except for the control) and pulping for a further 2 minutes to get good dispersion and distribution of the polyester fibers. This Furnish was then transferred to the machine chest, so that it could be diluted for forwarding to the headbox, i.e. 566 g solids in 500L - stock consistency.

The control used 100% CTMP pulp (without polyester fibers), as a basis for comparison.

Items 1, 2 and 3 used polyester fibers added as described above. The fibers were standard uncrimped commercial PMS fibers of 1.7 dtex, and 6 mm cut length, onto which a commercial water-dispersing coating had been applied, so the coating according to the invention was substituted by the following procedure: The commercial coating was removed by washing at 60°C, then 0.5% solids OWF was applied at a bath ratio (BR) of 1:3.75, i.e. using 200 g of fibers in 750 ml of aqueous coating, at 17% solids content for item 1, and 13% solids for items 2 and 3. The coated fibers were dried at 90°C, then heat-set at 130°C, to simulate a typical process to control shrinkage. The copolyesters in the coatings used were, for item 1, as prepared in Example 12 of PCT/US 89/00829, and for items 2 and 3, as prepared in Example 15 of that PCT/US 89/00829.

The cross-linkers used were "TYZOR" LA for items 1 and 2, and citric acid for item 3, using 0.5% on the weight of the coating, each time.

TABLE 1

| Test | Control | 1 | 2 | 3 |
|------|---------|---|---|---|
| Density (g/cm$^3$) | 0.103 | 0.093 | 0.103 | 0.100 |
| Ave Tensile Index (MD+XD/2) | 9.34 | 9.56 | 8.70 | 9.75 |
| Ave Tear Index (MD+XD/2) | 9.62 | 10.00 | 10.28 | 10.39 |
| Drip Capacity (ml) | 2.22 | 3.43 | 1.84 | 2.04 |
| Absorption (ml) | 11.46 | 13.26 | 12.03 | 12.43 |
| Amount absorbed in Run-Off (of 15ml) | 8.21 | 8.73 | 8.38 | 8.36 |
| Wick length | | | | |
| after 30 sec. | 51.00 | 49.00 | 55.00 | 52.00 |
| after 60 sec. | 69.00 | 68.00 | 73.00 | 70.00 |

The improvement in hydrophilicity is evident from several of these test results. The tensile properties were surprisingly good, showing that, despite the wet-laying treatment, the water-dispersible characteristics were durable enough to withstand such treatment and provide uniform distribution of the relatively small proportion of polyester throughout the sheets. The improvements in tear index were particularly impressive.

As indicated and as known in the art, such as Pulp and Paper, Volumes 1 and 2, by J. Casey, various kinds of pulp are used commercially in wet-laying processes and their methods of preparation and the treatments to which the pulps are subjected vary according to what is the desired end-use or objective, and it has long been desirable to incorporate synthetic fibers therein. So the present invention is expected to provide important advantages, and to fulfill various needs. that have been expected by those skilled in the art, but have not hitherto been able to accomplish, without unreasonable economic costs, because of deficiencies in existing materials.

In addition to the provision of improved polyester fiber, referred to herein and in the copending applications, special reference should be made to Examples 22-25 of copending application DP-4349-A (such as are incorporated herein), demonstrating the coating of fibers other than polyester, and specifically polypropylene and aramid fibers, as such improvements may be of great benefit to their use in wet-laying processes. Similar improvement can be demonstrated on acrylic, and polyamide or other synthetic fibers.

Another use that may be opened up by the improvements in water-dispersibility is in fluff pulp, such as is used for absorbence, e.g., for incontinence products. Hitherto, attempts to provide integrity, i.e. web or pad integrity, to such products by incorporating various synthetic fibers has met with little or no practical success, unless recourse is made to thermal bonding fibers. This is reported by R. Iyengar et al, Textile Research Journal, May 1987; promising products, after the first micturation, lose advantage and prove unacceptable in regard to strike through or rewetting. Superabsorbent materials could also be improved by incorporating (economically-viable) synthetic fibers to prevent gel-block and to give improved comfort to users as regards wet incontinence products.

Surprisingly, coated fibers according to the present invention may be processed into a speciality improved fluff pulp, along with wood pulp, and the hydrophilic nature is improved sufficiently and permanent enough to withstand fluff-pulp processing, and multiple wetting by the ultimate consumer, with improved product performance over prior attempts. These fibers may be of 6 mm or longer, in length, and 0.5 denier to 20 denier, with or without crimp, in round or irregular cross-sections having an increased surface area, as indicated above.

Pulp products, both bleached and unbleached, with very low degrees of refining, 21° SR, and unrefined fluff pulp, approx. 15° SR, have been prepared on paper pilot machines or on Bruderhaus laboratory inclined wire machines to demonstrate that these coated synthetic fibers can be uniformly dispersed in percentages of up to 60% synthetic fiber using 12 mm cut lenght and 80 to 90% in 6mm cut lengths when using 1-6 denier fibers. The preferred levels of synthetic fiber addition to the fluff pulp remain low (2-10%) on economic grounds. Unexpected benefits that have been observed include rapid dewatering, and that the moisture off the wet end of the machine can be reduced by 5-20%, enabling more rapid drying, and that less suction on the wire (to help the drainage of water from the stock furnish leaving the headbox) is required. The improvement in throughput is very significant in practice.

Such unexpected benefits in any press-section means that higher press loads may be applied before crushing or damaging the pulp, with resultant energy savings in drying. Alternatively, with the same press settings, a more bulky fluff-board roll (e.g. lower density) could be made to further facilitate the opening of the fluff pulp in the hammermill. Lower drying temperatures or greater productivity are also feasible in the drying section.

Higher initial wet web strengths, and tear are found when synthetic fibers are blended into pulps used in paper making in which the pulps have been well refined. However, surprisingly in this instance, when using unrefined or only lightly refined fluff pulp of approx. 15° SR, both dry tensile and tear may be reduced, thus benefiting the opening process used in diaper manufacture, namely reducing the energy required by the hammermill to open up the fluff to its final state in the incontinence product.

Also, as the hydrophilic coating can be firmly bonded to the new fiber, the waster (produced in diaper or other incontinence and wet wipe products) can be recycled without causing damage to the hammermill, or sticking in the system, or being inadequately re-opened into nit-free fluff.

## Claims

1. Improved water-dispersible synthetic polymer fiber that is coated with a water-dispersing coating of a copolyester, having polyether segments as well as polyester linkages, and wherein the improvement is characterized in that the copolyester contains residues of a chemical compound containing polar groups such as hydroxyl groups (OH) and quaternary ammonium and amine groups (referred to generically as NH).

2. A fiber according to Claim 1, characterized in that the synthetic polymer fiber is a polyester fiber.

3. A fiber according to Claim 1 or 2, characterized in that the copolyester has a content of about 0.5 to about 20% by weight of a residue of a polyhydroxy compound, said residue containing at least 3 carbon atoms with hydroxyl functional groups.

4. A fiber according to any of Claims 1 to 3, characterized in that the copolyester has been further modified by having been cross-linked with a cross-linking agent that is a polycarboxylic acid or ester thereof with a lower alcohol.

5. A fiber according to any of Claims 1 to 3, characterized in that the copolyester has been further modified by having been cross-linked with an N-alkoxymethyl or N-hydroxymethyl compound.

6. A fiber according to Claim 4 or 5, characterized in that content of cross-linking agent is substantially 0.1-20% by weight (of the copolyester).

7. Polyester fiber according to Claim 4, 5 or 6, characterized in that the copolyester has been further modified by having been cross-linked with a polyvalent metal compound, such as of titanium, zirconium or aliminum.

8. Polyester fiber according to any of Claims 1 to 7, characterized in that the amount of copolyester is substantially 0.05-1.2%, based on the weight of the polyester fiber.